# EUROPEAN PATENT SPECIFICATION

(11) **EP 3 549 549 B1**
(45) Date of publication and mention of the grant of the patent: **01.07.2020**
(21) Application number: 17778322.2
(22) Date of filing: 31.05.2017
(51) Int. Cl.: A61C 13/00, A61C 13/273, B23C 3/00, A61C 8/00

(54) **MILLING TOOL OF A DENTAL SUPERSTRUCTURE**
FRÄSWERKZEUG EINER DENTALEN SUPRASTRUKTUR
OUTIL DE FRAISAGE D'UNE SUPERSTRUCTURE DENTAIRE

(30) Priority: 16.01.2017 ES 201730038 U
(43) Date of publication of application: 09.10.2019
(73) Proprietor: Xam-Mar Mangrane, Esteban, 25002 Lleida (ES)
(72) Inventor: Xam-Mar Mangrane, Esteban, 25002 Lleida (ES)
(74) Representative: Carlos Hernando, Borja
(86) International application number: PCT/ES2017/070384
(87) International publication number: WO 2018/130730

(56) References cited:
- WO-A1-2017/002326
- DE-B- 1 139 348
- US-A- 5 704 736
- US-A1- 2004 156 689

## Description

### OBJECT OF THE INVENTION

The present invention consists of a milling tool of a dental structure, used for milling the seat of the screw and the inner diameter of the straight channel of bolted angled dental structures with a direct connection to a dental implant.

The present invention is of particular application in the dental sector, and more specifically in the sector of dental implants.

### BACKGROUND OF THE INVENTION

The incorporation of CAD/CAM technology (*Computer Aided Design* and *Computer Assisted Manufacturing)* in the dental sector had enabled the onset of new procedures for the development of dental structures, such as direct screw-to-implant restorations. By means of this work procedure, it is possible to carry out structures or superstructures (crowns, bridges and complete structures) both straight and angled pieces, milled in a single piece.

The complexity of the machining of these direct-to-implant dental structures or superstructures lies not only in the machining of the connection itself of the implant but also of the seat of the screw.

The techniques used so far for machining the channel and the seat of the screw of the structures with direct connection to angled implants consist of introducing a milling cutter from the end of the angled channel to the seat of the screw, as for example in Spanish patent ES2345636T3. This embodiment enables continuity of the channel to the seat, enabling introduction of the screw from outside the angled channel. In this embodiment, however, the orifice of the entrance channel is oversized since the angled channel and the inner seat of the screw are machined with the same tool, limiting the possibility of carrying out seats of the screws with different angles. Oversizing of the channel has adverse effects on both the resulting aesthetics and the structural behavior of the structure or superstructure, also reducing its use in the production of more unfavorable situations.

The present application complements the invention of Spanish patent application 201631582 relating to a method for manufacturing angled dental structures or superstructures, comprising the making of two holes in the superstructure forming two straight channels with a direction that does not coincide, in which a first channel has the direction of the insertion axis and a second channel has the entrance of the screw or angled channel towards an aesthetically pleasing position. Both channels converge in the interior of the structure or superstructure.

There are currently T-shaped milling tools on the market that are not capable of milling with optimum quality the diameter of the straight channel of the first channel described above and the seat of a smaller diameter, both positive and negative, of the screw in the angled dental structure or superstructure.

Prior art document US8464768B2 describes a milling tool with a support area for a milling machine and a useful cutting area with a cutting element with different cutting surfaces.

### DESCRIPTION OF THE INVENTION

According to the foregoing, the present invention solves the lack of tools with special shapes that enable carrying out the milling of the seat of the screw and the inner diameter of the straight channel of angled dental structures or superstructures with direct-to-implant connection. The object of the invention is therefore a milling tool of a dental structure or superstructure according to claim 1. Specifically, the invention relates to a milling tool of a dental superstructure, used for the inner milling of the seat of a screw and of a straight channel in angled dental superstructures for screwing by means of a direct connection to a dental implant, comprising:
- a support area for a milling machine, and
- a useful cutting area, provided with a cutting element and at least one cutting tab and a preferably cylindrical rod connecting the cutting tab to the tool support area, the cutting tab having at least one useful cutting surface that is inclined with respect to the longitudinal axis of the rod, inclination which refers to the cutting angle of the tool and which will always be inclined with respect to the axis.

The tool may have several tabs, preferably between 2 and 5 cutting tabs. Each of said tabs, in addition to the useful lower cutting surface, may have a useful upper cutting surface that is perpendicular to the longitudinal axis of the rod and/or a useful lateral cutting surface, which is parallel to the longitudinal axis of the rod. The joining edges between the useful cutting surfaces are sharp or rounded edges.

Preferably, the dimensions or distances between the different components of the tool are:
- The useful lower cutting surface forms an angle with the longitudinal axis of the rod or with the useful lateral cutting surface of between 15° and 175°.
- the maximum distance (d₁) between the useful upper and lower cutting surfaces is between 0.5 and 4 mm.
- the maximum distance (d₂) between the useful lateral cutting surface and the longitudinal axis of the rod varies between 1 and 2.1 mm.
- the diameter of the circumscribed circle formed by the useful lateral cutting surfaces of the cutting tabs varies between 1.3 and 2.1 mm.

The rod may have a longitudinal cut along the length thereof, reducing its cross-section in order to facilitate access of the tool to the interior of the channel of the dental superstructure. Preferably said rod is cylindrical prior to the execution of the cut, said cut being perpendicular to the plane formed between the generatrix of the rod and the base thereof.

The tool object of the invention can be manufactured in one or several materials, which are preferably chosen from among high-speed steel (HSS) and/or non-ferrous alloys of carbide and/or hard metal and/or ceramic and/or cemented carbide and/or sintered carbide and/or coated carbide, without limitation to other materials used in cutting tools. Similarly, some of the elements of the tool may comprise a treatment and/or a surface finish.

### BRIEF DESCRIPTION OF THE DRAWINGS

In order to complete the description of the present invention, and for the purpose of helping to make the characteristics of the invention more readily understandable, the present specification is accompanied by a set of figures by way of illustration and not limitation:
Figures 1a, 1b and 1c show the steps of the milling process of the seat of the screw and of the inner area of the straight channel of the structure or superstructure with direct connection to the implant by means of the tool object of the invention.
Figures 2a and 2b show a first embodiment of the tool with 3 cutting tabs.
Figures 3a and 3b show a second embodiment of the tool forming a single cutting element with a single cutting tab.

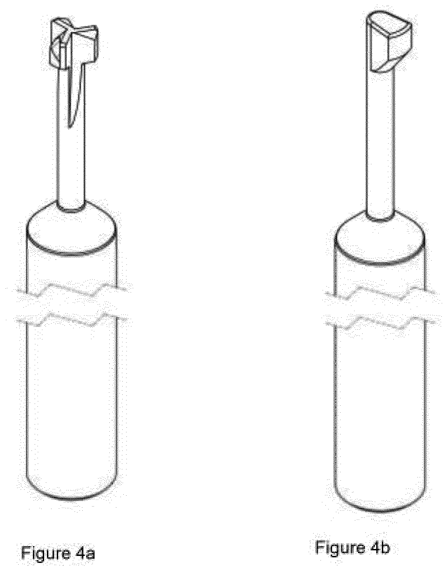

Figures 4a and 4b show perspective views of the first embodiment (Figures 2a, 2b) and the second embodiment (Figures 3a, 3b), respectively.

### DESCRIPTION OF A PREFERRED EMBODIMENT

The present invention consists of a precision milling tool (15) intended for prosthetic laboratories and dental milling centers. It is specially designed for milling the seat of a screw (13) and of the inner area (12) of the straight channel (14) of the angled dental structures or superstructures (11) to be screwed by means of direct connection to an implant.

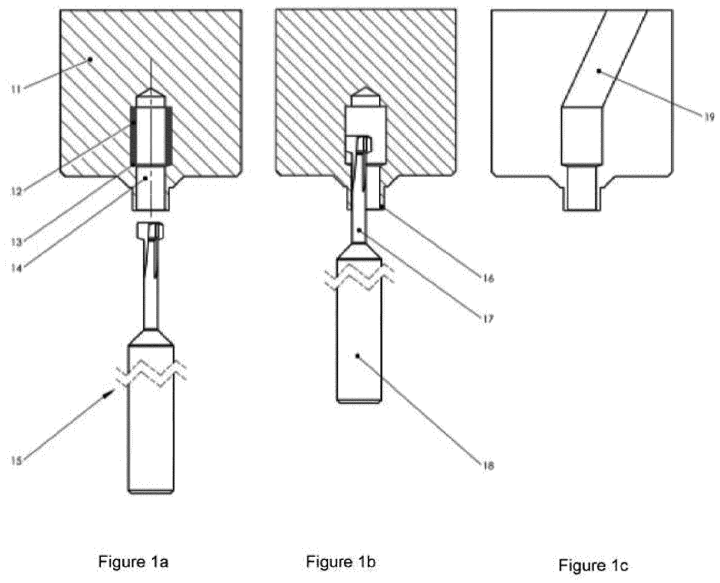

The present invention relates to a tool (15) that enables carrying out a method for manufacturing angled dental structures or superstructures (11), according to Figures 1a to 1c, and which enables precision machining of the seat of a screw (13) inside the channel of the superstructure, with a straight or conical shape, and without limitation of angles, whether positive of negative, and in turn minimizing the diameter of the entrance hole of the angled channel (19). In order to carry this out, two holes are made in the superstructure (11) forming two straight channels with a non-coinciding direction, in which a first channel has the direction of the insertion axis (14) and a second channel has the entrance of the screw or the angled channel (19) towards an aesthetically pleasing position. Both channels converge on the inside of the structure or superstructure (11). The first channel consists of two different diameters, a first diameter (14) carried out by means of a first bore or milling cutter and which will exclusively enable passing the screw thread, and a second diameter (12), larger than the previous one, enabling the passage of the screw head through the angled or inclined channel (19) to the surface of the seat (13) where the screw head abuts, limiting its advance along the channel. In order to achieve the second diameter (12), the tool (15) object of the present invention is introduced inside the first channel. The diameter (14) of the first channel of the structure or superstructure (11) will depend on the type of connection (16) of said superstructure (11) to the implant.

The milling tool (15) object of the invention is integrally designed in a single piece without insertable cutting inserts. The tool (15) has two areas with different functional nature, a support area (18) and a useful cutting area (17).

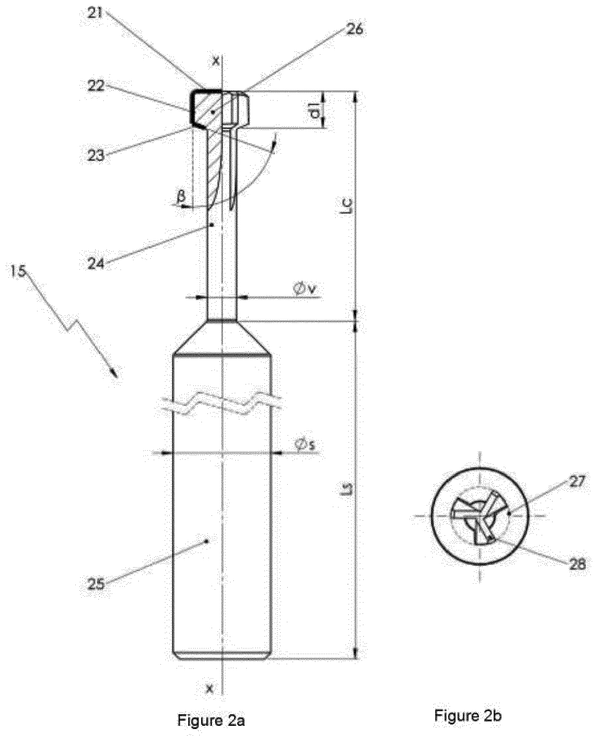

In a first embodiment, shown in Figures 2a and 2b, the useful cutting area (17) of the tool (15) is formed by a cutting element (26) located at the end of the tool (15) and a cylindrical rod (24) that links the cutting element (26) with the support area (25) of the tool (15). The length of the useful cutting area (26) Lc varies preferably between 4 and 10 mm. The diameter of the rod Øv varies between 0.40 and 1.2 mm depending on the compatibility of the implant being used.

The cutting element (26) may comprise between one and five cutting tabs (28), preferably three, as shown in Figures 2a and 2b. Each cutting tab (28) in turn comprises between one and three useful cutting surfaces (21, 22, 23), which are those in contact with the surface to be milled (12, 13, 14) of the inner channel. In the example shown, the cutting tab (28) has three useful cutting surfaces that are the upper surface (21), the lateral surface (22) and the lower surface (23) depending on the position thereof, although the essential useful cutting surface is the lower cutting surface (23). This useful lower cutting surface has an angle β with the longitudinal axis x of the rod (24), or with the useful lateral cutting surface (22), between 15 and 175°, and being able to mill both positive and negative seats of screws, that is, that the angle of the seat of the screw may be upward or downward, i.e. like a V or an inverted V. Similarly, the maximum distance d₁ between the useful upper cutting surface (21) and the useful lower cutting surface (23) is between 0.5 and 4 mm. The diameter of the circumscribed circle (27) to the polygon formed by the ends of the tabs varies between 1.3 and 2.1 mm.

Similarly, the useful cutting surfaces (21, 22, 23) may be flat or curved surfaces, and the joining edges between the surfaces can be machined, for example, with sharp or rounded edges, depending on the desired finish.

The support area (25) of the tool (15) enables securing said milling tool (15) to the milling machine by means of a head or a tool holder support. The cylindrical end of the support area (25) of the tool (15) enables adjusting it to the head of the milling machine and has a diameter Øs greater than that of the rod Øv. The length Ls and diameter Øs of the support area (25) are variable depending on the tool holder head of the milling machine used, the most frequently used diameters being 2, 3, 4, and 6 mm, without limitation to other dimensions that can be used.

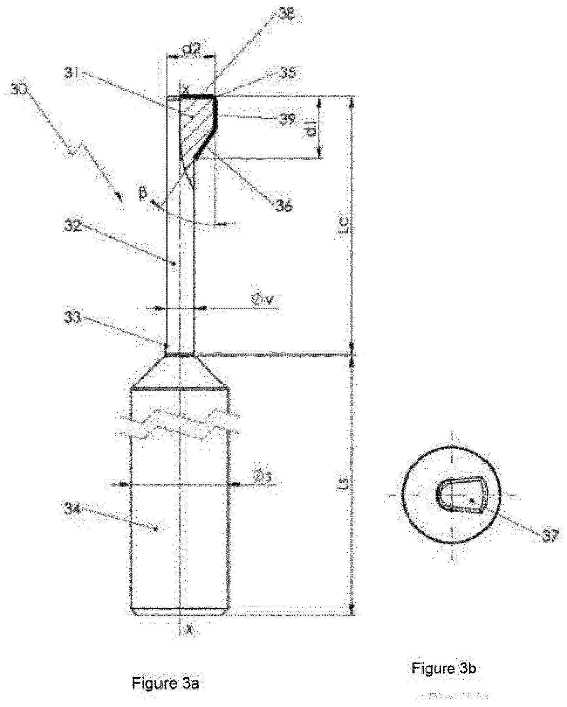

In an alternative construction, shown in Figures 3a and 3b, the tool (30) comprises only one cutting element (31) with a single cutting tab (37), one rod (32) and one support area (34) of the tool (30). In this example, the cutting tab comprises three useful cutting surfaces (36) although it could incorporate only one, the lower surface, or two, the lower surface and the lateral surface, or the lower surface and the upper surface. The construction of this cutting tab (3) is like that of the cutting tabs of the previous example. The joining edges (35) are preferably rounded, although they may not be so. As in the previous example, the lower useful cutting surface is preferably inclined at an angle β to the longitudinal axis x of the rod (32), or to the useful lateral cutting surface, between 15 and 175°.

In this exemplary embodiment of the tool (30), the rod (32) has a longitudinal cut (33) along the rod (32) thus reducing the cross-section of said rod (32) and facilitating access to the interior of the channel of the dental structure or superstructure (11). Preferably the rod (32) has a circular cross-section whereby in carrying out the cut (33) it no longer has said circular cross-section, said longitudinal cut (33) being perpendicular to the plane formed between the generatrix of the rod (32) and the base thereof. As mentioned, this longitudinal cut (33) enables the tool (30) to safely access through the straight channel (14) of the dental structure or superstructure (11), the diameter of which depends on the connection (16) and thread of the compatibility of the implant. The maximum distance d₂ between the useful lateral cutting surface and the longitudinal axis x of the rod (32), or the cut if any, varies between 1 and 2.1 mm.

As in the previous example, the maximum distance d₁ between the useful upper cutting surface (21) and the useful lower cutting surface (23) is between 0.5 and 4 mm. Similarly, the support area (34) of the tool (30) enables fastening said milling tool (30) to the milling machine by means of a head or tool holder support. The cylindrical end of the support area (34) of the tool (30) enables adjusting it to the head of the milling machine, and it has a diameter Øs greater than the rod Øv. The length Ls and diameter Øs of the support area (34) are variable depending on the tool holder head of the milling machine used, the most frequently used diameters being 2, 3, 4, and 6 mm, without limitation to other dimensions that can be used.

The tool (15, 30) object of the present invention is manufactured from the same material, which may preferably be high-speed steel (HSS), non-ferrous alloys of carbide, hard metal, ceramic, cemented carbide, sintered carbide or coated carbide, without limitation to other materials used in cutting tools.

Similarly, the tool (15, 30) may or may not have surface treatment and/or surface finish, each area of the tool being able to have a different finish or surface treatment, including lack of treatment. The present invention incorporates those treatments or surface finishes intended to modify the behavior of the tool against temperature, wear, hardness, toughness and/or resilience, without limitation to other treatments or surface finishes. The useful cutting surfaces (21, 22, 23, 36) of the tool may or may not have a sharp edge depending on the material used in the manufacture thereof.

The tool (15, 30) object of the invention enables machining biocompatible materials used in dentistry: metals such as titanium alloys and chromium-cobalt alloys, plastics such as PEEK and POM, and ceramics such as zirconium ceramics (zirconia) among other materials.

## Claims

1. A milling tool (15, 30) for a dental superstructure, usable for the inner milling of the seat of a screw and of a straight channel in angled dental superstructures for screwing by means of a direct connection to a dental implant, comprising:
- a support area (18, 25, 34) for a milling machine,
- a useful cutting area (17, 26, 31), provided with a cutting element with at least one cutting tab (28, 37) and one rod (24, 32) linking the cutting tab (28, 37) with the tool support area (18, 25, 34) of the tool (15, 30) the cutting tab (28, 37) having a useful upper cutting surface (21, 38), perpendicular to the longitudinal axis (x) of the rod (24, 32), a useful lateral cutting surface (22, 39) parallel to the longitudinal axis (x) of the rod (24, 32), and
**characterized in that** it has at least one useful lower cutting surface (23, 36), inclined with respect to the longitudinal axis (x) of the rod (24, 32).

2. The milling tool according to claim 1, **characterized in that** the useful cutting area (26) comprises between two and five cutting tabs (28).

3. The milling tool according to the preceding claims, **characterized in that** the useful lower cutting surface (23, 36) forms an angle (β) with the longitudinal axis (x) of the rod (24, 32) between 15° and 175°.

4. The milling tool according to the preceding claims, **characterized in that** the maximum distance (d₁) between the useful upper cutting surfaces (21, 38) and the useful lower cutting surfaces (23, 36) is between 0.5 and 4 mm.

5. The milling tool according to the preceding claims, **characterized in that** the rod (32) comprises a longitudinal cut (33) along the length thereof, reducing its cross-section in order to facilitate access of the tool to the interior of the channel of the dental superstructure.

6. The milling tool according to claim 5, **characterized in that** the rod (32) is cylindrical and the longitudinal cut (33) is perpendicular to the plane formed between the generatrix of the rod (24) and the base thereof.

7. The milling tool according to the preceding claims, **characterized in that** the joining edges (35) between the useful cutting surfaces are sharp or rounded edges.

8. The milling tool according to the preceding claims, **characterized in that** the maximum distance (d₂) between the useful lateral cutting surface (22, 39) and the longitudinal axis (x) of the rod (24, 32), varies between 1 and 2.1 mm.

9. The milling tool according to claims 2 to 8, **characterized in that** the diameter of the circumscribed circle (27) formed by the useful lateral cutting surfaces (22) of the cutting tabs (28) varies between 1.3 and 2.1 mm.

10. The milling tool according to the preceding claims, **characterized in that** it is manufactured in one or several materials, which may preferably be high-speed steel (HSS) and/or non-ferrous alloys of carbide and/or hard metal and/or ceramic and/or cemented carbide and/or sintered carbide and/or coated carbide.

11. The milling tool according to the preceding claims, **characterized in that** at least one tool element comprises a treatment and/or surface finish.

## Patentansprüche

1. Fräswerkzeug (15, 30) für eine dentale Suprastruktur, das für das Innenfräsen des Sitzes einer Schraube und eines geraden Kanals in abgewinkelten dentalen Suprastrukturen zum Verschrauben mittels eines direkten Anschlusses an ein Zahnimplantat verwendbar ist, umfassend:
- eine Stützfläche (18, 25, 34) für eine Fräsmaschine,
- einen nutzbaren Schneidbereich (17, 26, 31), der mit einem Schneidelement mit mindestens einer Schneidlasche (28, 37) und einer Stange (24, 32) versehen ist, die die Schneidlasche (28, 37) mit der Werkzeugstützfläche (18, 25, 34) des Werkzeugs (15, 30) verbindet, wobei die Schneidlasche (28, 37) eine obere nutzbare Schneidfläche (21, 38) senkrecht zur Längsachse (x) der Stange (24, 32) und eine seitliche nutzbare Schneidfläche (22, 39) parallel zur Längsachse (x) der Stange (24, 32) aufweist, und
**dadurch gekennzeichnet, dass** es mindestens eine nutzbare untere Schneidfläche (23, 36) aufweist, die in Bezug auf die Längsachse (x) der Stange (24, 32) geneigt ist.

2. Fräswerkzeug gemäß Anspruch 1, **dadurch gekennzeichnet, dass** der nutzbare Schneidbereich (26) zwischen zwei und fünf Schneidlaschen (28) umfasst.

3. Fräswerkzeug gemäß den vorhergehenden Ansprüchen, **dadurch gekennzeichnet, dass** die nutzbare untere Schneidfläche (23, 36) mit der Längsachse (x) der Stange (24, 32) einen Winkel (ß) zwischen 15° und 175° einschließt.

4. Fräswerkzeug gemäß den vorhergehenden Ansprüchen, **dadurch gekennzeichnet, dass** der maximale Abstand (d₁) zwischen den nutzbaren oberen Schneidflächen (21, 38) und den nutzbaren unteren Schneidflächen (23, 36) zwischen 0,5 und 4 mm liegt.

5. Fräswerkzeug gemäß den vorhergehenden Ansprüchen, **dadurch gekennzeichnet, dass** die Stange (32) entlang ihrer Länge einen Längsschnitt (33) umfasst, der ihren Querschnitt verringert, um den Zugang des Werkzeugs zum Inneren des Kanals der dentalen Suprastruktur zu ermöglichen.

6. Fräswerkzeug gemäß Anspruch 5, **dadurch gekennzeichnet, dass** die Stange (32) zylinderförmig ist und der Längsschnitt (33) senkrecht zu der Ebene ist, die zwischen der Erzeugenden der Stange (24) und ihrer Basis gebildet wird.

7. Fräswerkzeug gemäß den vorhergehenden Ansprüchen, **dadurch gekennzeichnet, dass** die Verbindungskanten (35) zwischen den nutzbaren Schneidflächen scharfe oder abgerundete Kanten sind.

8. Fräswerkzeug gemäß den vorhergehenden Ansprüchen, **dadurch gekennzeichnet, dass** der maximale Abstand (d₂) zwischen der nutzbaren seitlichen Schneidfläche (22, 39) und der Längsachse (x) der Stange (24, 32) zwischen 1 und 2,1 mm schwankt.

9. Fräswerkzeug gemäß Anspruch 2 bis 8, **dadurch gekennzeichnet, dass** der Durchmesser des umschriebenen Kreises (27), der durch die nutzbaren seitlichen Schneidflächen (22) der Schneidlaschen (28) gebildet wird, zwischen 1,3 und 2,1 mm schwankt.

10. Fräswerkzeug gemäß den vorhergehenden Ansprüchen, **dadurch gekennzeichnet, dass** es aus einem oder mehreren Werkstoffen hergestellt ist, die vorzugsweise Schnellarbeitsstahl (HSS) und/oder Nichteisen-Legierungen aus Karbid und/oder Hartmetall und/oder Keramik und/oder zementiertem Karbid und/oder Sinterkarbid und/oder beschichtetem Karbid sein können.

11. Fräswerkzeug gemäß den vorhergehenden Ansprüchen, **dadurch gekennzeichnet, dass** mindestens ein Werkzeugelement eine Behandlung und/oder Oberflächenveredelung umfasst.

## Revendications

1. Outil de fraisage (15, 30) pour une superstructure dentaire, utilisable pour le fraisage intérieur du siège d'une vis et d'un canal droit dans des superstructures dentaires coudées pour le vissage au moyen d'une connexion directe à un implant dentaire, comprenant :
- une zone de support (18, 25, 34) pour une fraiseuse,
- une zone de coupe utile (17, 26, 31), munie d'un élément de coupe avec au moins une patte de coupe (28, 37) et une tige (24, 32) reliant la patte de coupe (28, 37) à la zone de support d'outil (18, 25, 34) de l'outil (15, 30) la patte de coupe (28, 37) ayant une surface de coupe supérieure utile (21, 38), perpendiculaire à l'axe longitudinal (x) de la tige (24, 32), une surface de coupe latérale utile (22, 39) parallèle à l'axe longitudinal (x) de la tige (24, 32), et
**caractérisé en ce qu'**il présente au moins une surface de coupe inférieure utile (23, 36), inclinée par rapport à l'axe longitudinal (x) de la tige (24, 32).

2. Outil de fraisage selon la revendication 1, **caractérisé en ce que** la zone de coupe utile (26) comprend entre deux et cinq pattes de coupe (28).

3. Outil de fraisage selon les revendications précédentes, **caractérisé en ce que** la surface de coupe inférieure utile (23, 36) forme un angle (β) avec l'axe longitudinal (x) de la tige (24, 32) compris entre 15° et 175°.

4. Outil de fraisage selon les revendications précédentes, **caractérisé en ce que** la distance maximale (d₁) entre les surfaces de coupe supérieures utiles (21, 38) et les surfaces de coupe inférieures utiles (23, 36) est comprise entre 0,5 et 4 mm.

5. Outil de fraisage selon les revendications précédentes, **caractérisé en ce que** la tige (32) comprend une coupe longitudinale (33) sur sa longueur, réduisant sa section transversale afin de faciliter l'accès de l'outil à l'intérieur du canal de la superstructure dentaire.

6. Outil de fraisage selon la revendication 5, **caractérisé en ce que** la tige (32) est cylindrique et la coupe longitudinale (33) est perpendiculaire au plan formé entre la génératrice de la tige (24) et la base de celle-ci.

7. Outil de fraisage selon les revendications précédentes, **caractérisé en ce que** les arêtes de jonction (35) entre les surfaces de coupe utiles sont des arêtes vives ou arrondies.

8. Outil de fraisage selon les revendications précédentes, **caractérisé en ce que** la distance maximale (d₂) entre la surface de coupe latérale utile (22, 39) et l'axe longitudinal (x) de la tige (24, 32), varie entre 1 et 2,1 mm.

9. Outil de fraisage selon les revendications 2 à 8, **caractérisé en ce que** le diamètre du cercle circonscrit (27) formé par les surfaces de coupe latérales utiles (22) des pattes de coupe (28) varie entre 1,3 et 2,1 mm.

10. Outil de fraisage selon les revendications précédentes, **caractérisé en ce qu'**il est fabriqué dans un ou plusieurs matériaux, qui peuvent être de préférence de l'acier rapide (HSS) et/ou des alliages non ferreux de carbure et/ou de métal dur et/ou de céramique et/ou de carbure cémenté et/ou de carbure fritté et/ou de carbure revêtu.

11. Outil de fraisage selon les revendications précédentes, **caractérisé en ce qu'**au moins un élément de l'outil comprend un traitement et/ou un état de surface.
